# EUROPEAN PATENT APPLICATION

(11) **EP 4 336 208 A1**
(43) Date of publication of application: **13.03.2024**
(21) Application number: 22820110.9
(22) Date of filing: 31.05.2022
(51) Int. Cl.: G01S 7/03, F21S 45/00, F21V 33/00, G01S 13/931

(54) **LAMP DEVICE**

(30) Priority: 10.06.2021 JP 2021097245
(71) Applicant: Stanley Electric Co. Ltd., Tokyo 153-8636 (JP)
(72) Inventor: UENAGA Yuta, Tokyo 153-8636 (JP)
(74) Representative: Pritzlaff, Stefanie Lydia
(86) International application number: PCT/JP2022/022220
(87) International publication number: WO 2022/259928

(57) **Abstract**

A lamp device includes: a housing to be attached to a vehicle; a lamp unit; a radar unit including an antenna that transmits a radar wave and receives a reflected wave from an object; a light-transmitting cover that is attached to cover a front of the housing so as to accommodate the lamp unit and the radar unit in an internal space thereof, the light-transmitting cover transmitting the radar wave; and an extension disposed in the internal space of the housing, the extension including an electromagnetic-wave absorber.

## Description

### Technical Field

The present invention relates to a lamp device, particularly to a lamp device for vehicles with a built-in radar device.

### Background Art

For the purposes of driving support and automated driving of vehicles, various sensors are used, which are acceleration sensors and GPS sensors, and also cameras, light detection and ranging (LiDAR), and millimeter-wave sensors.

In particular, millimeter-wave radars keep the high detection performance without being affected by environments such as nighttime or backlighting, and bad weather such as dense fog, rainfall, and snowfall. These radars also directly detect the distance and direction to the object and the relative velocity to the object. Thus, they have the feature of also detecting an object at short distances at high speed and with high precision.

Patent Literature 1 discloses a vehicular lamp having a millimeter-wave radar mounted in the lamp chamber, and having a light guide member between the front cover and the millimeter-wave radar so as to let millimeter waves pass therethrough.

Patent Literature 2 discloses a vehicular lamp having a light-source unit and a millimeter-wave radar mounted therein, and having a resin cover appearing on the exterior of the vehicle body. A part of the resin cover has an opaque design member that shields the millimeter-wave radar.

Patent Literature 3 discloses an on-vehicle light device including a separator. The separator is placed to partition a space between a lamp unit and a radar unit, and blocks the transmission of radiant heat and electromagnetic waves between the lamp unit and the radar unit.

### Citation List

### Patent Literatures

Patent Literature 1: Japanese Patent Publication No. 4842161
Patent Literature 2: Japanese Patent Publication No. 5130192
Patent Literature 3: Japanese patent Application Laid-Open No. 2020-51974 A

### Summary of Invention

### Technical Problem

However, if radar waves are reflected by a member placed on the front of the radar unit, such as a front cover or an extension, the reflected waves and multiple reflected waves may generate ghosts (obstacles that do not actually exist). This will degrade the detection function of the radar device.

In particular, the radar waves emitted from the radar unit and reflected within the lamp device may be further reflected by a vehicle component made of metal, for example, and returned into the lamp device as reflected radar waves (multiple reflected waves). These reflected waves have a strong intensity and are detected as noise and ghosts, and thus greatly degrade the detection function of the radar device.

The flight time of the reflected radar waves reflected by a vehicle component such as the vehicle body frame and returned into the lamp device is close to the flight time of the reflected radar waves from an obstacle that should be detected and is in front of the lamp device (i.e., the detection distance to an obstacle). They therefore can cause ghosts (false detections), in which non-existent obstacles are detected.

In view of the above, the present invention aims to provide a lamp device capable of effectively suppressing reflection and multiple reflection of radar waves, the lamp device having high-precision radar functions such as low noise, and a large dynamic range.

The present invention also aims to provide a lamp device capable of effectively suppressing multiple reflections caused by reflected radar waves that are reflected by a part of the vehicle body and return to the inside of the lamp device, the lamp device having a high-precision radar function with a large dynamic range.

### Solution to Problem

A lamp device according to one embodiment of the present invention includes:
a housing to be attached to a vehicle;
a lamp unit;
a radar unit including an antenna that transmits a radar wave and receives a reflected wave from an object;
a light-transmitting cover that is attached to cover a front of the housing so as to accommodate the lamp unit and the radar unit in an internal space thereof, the light-transmitting cover transmitting the radar wave; and
an extension disposed in the internal space of the housing, the extension including an electromagnetic-wave absorber.

### Brief Description of Drawings

FIG. 1 schematically shows an example of the internal structure of a lamp device that is a first embodiment of the present invention.
FIG. 2A schematically shows the arrangement of a radar unit 15, an extension 17, and a light-transmitting cover 12.
FIG. 2B shows the simulated result of electromagnetic field intensity inside and outside the lamp device 10 when a radar wave TX is radiated from the radar unit 15.
FIG. 3 is a graph showing the reflectance of an electromagnetic wave relative to the incident angle, the electromagnetic wave being incident on polycarbonate (PC).
FIG. 4A schematically shows the arrangement of a radar unit 15, an extension 91, and a light-transmitting cover 12 in a comparative example.
FIG. 4B shows the simulated result of electromagnetic field intensity of the comparative example shown in FIG. 4A.
FIG. 5 is a graph showing the results of calculating the transmittance versus thickness for electromagnetic waves incident on polycarbonate, carbon-containing polycarbonate, and a carbon sheet.
FIG. 6 schematically shows an electromagnetic-wave absorber extension that is a second embodiment of the present invention.
FIG. 7 schematically shows an example of the internal structure of a lamp device 10 that is a third embodiment of the present invention.

### Description of Embodiments

The following describes preferable embodiments of the present invention, and these embodiments may be modified or combined as appropriate. In the following descriptions and attached drawings, the same reference numerals indicate substantially the same or equivalent components.

### [First embodiment]

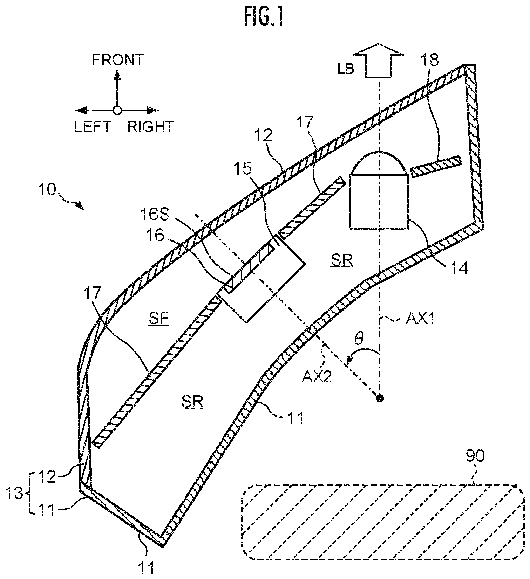

FIG. 1 schematically shows an example of the internal structure of a lamp device 10 that is a first embodiment of the present invention. The lamp device 10 is mounted in a vehicle, such as an automobile. The lamp device is used as a headlight, for example, but it can also be used as another lamp device such as a taillight.

The following describes an example of an automobile that is the vehicle, but the present invention is not limited thereto. That is, a vehicle in this description refers to a means of transportation such as a ship or an aircraft, and crewed and uncrewed transportation means.

FIG. 1 schematically shows a cross section in a horizontal plane (or a plane parallel to the road surface) when viewing the lamp device 10 (left headlight) mounted on the left front of the vehicle from the above.

The lamp device 10 includes a lamp casing (casing) 13 that is made up of a body (housing) 11 and a light-transmitting cover (front cover) 12 attached on the front or in front of the body 11.

That is, the light-transmitting cover 12 is attached to the body 11 so as to cover the front of the body 11, and the lamp device 10 is mounted on the vehicle body (not shown) by attaching the body 11 to the vehicle body. The light-transmitting cover 12 may have a light-transmitting property that transmits light other than white light such as red and yellow light.

The body 11 is made of plastic (resin). For instance, but not limited to, the body 11 for headlight is made of polypropylene (PP), and the body 11 for taillight is made of acrylonitrile styrene acrylic rubber (ASA). It may also be partially made of metal or other materials.

The light-transmitting cover 12 is made of a light-transmitting resin such as polycarbonate (PC) or acrylic (PMMA).

The lamp casing 13 houses therein: a headlight unit 14 that is a lamp unit (light source); a millimeter-wave radar unit (hereinafter simply referred to as radar unit) 15 that is a radar device; and an extension 17.

In this description, the lamp device 10 is not limited to a headlight light source, and refers to a light emitting device having the purpose or function of emitting light toward the outside, such as a taillight or a backlight.

The headlight unit 14 includes a light source such as a light emitting diode (LED), and a lens or reflector for distribution and irradiation of light from the light source. The headlight unit 14 is placed along the optical axis AX1, and is configured to emit a low beam (passing beam) or a high beam (driving beam) illumination light LB forward (FRONT in the drawing).

The lamp device 10 may also have another lamp unit therein, which functions as daytime running lights (DRL) or as turn lamps.

The radar unit 15 includes a radar wave transmitting/receiving antenna 16 having a transmitting/receiving surface 16S (hereinafter also called an antenna surface 16S) on the front. The radar unit 15 transmits radar waves such as millimeter waves from the antenna 16 and detects reflected waves reflected by an object.

A detection signal by the radar unit 15 is processed by a control and signal processing device, whereby the distance, speed, angle, and others to the object are detected.

For instance, the radar unit 15 has a power receiving terminal and a signal transmitting/receiving terminal, thus receiving power from the vehicle, and operating while transmitting and receiving various signals to and from a controller or computer mounted on the vehicle.

For instance, the radar unit 15 is controlled by an electronic control unit (ECU) mounted on the vehicle, and the detection signal by the radar unit 15 is processed by the ECU and used for various types of vehicle control and driving support.

For instance, the radar unit 15 preferably uses millimeter waves in the 76 to 81 GHz band, particularly millimeter waves in the 77 GHz and 79 GHz bands, but the waves used are not limited to these frequency bands.

The normal direction AX2 of the antenna surface 16S of the radar unit 15 is directed toward the outside (or toward the left for the left headlight) relative to the optical axis AX1 of the headlight unit 14 (or relative to the traveling direction of the vehicle) by an angle θ (45° in this embodiment).

The extension 17 is an electromagnetic-wave absorption extension that absorbs radar waves. For instance, the extension 17 can be a carbon sheet or a resin such as polycarbonate containing a carbon-based black pigment such as carbon. The extension 17 may be configured as an electromagnetic-wave absorber that absorbs radar waves.

Examples of the electromagnetic-wave absorbing material contained in the extension 17 include a black pigment, such as an iron oxide (e.g., magnetite type triiron tetroxide), a composite oxide of copper and chromium, or a composite oxide of copper, chromium, and zinc.

### [Example and comparative example]

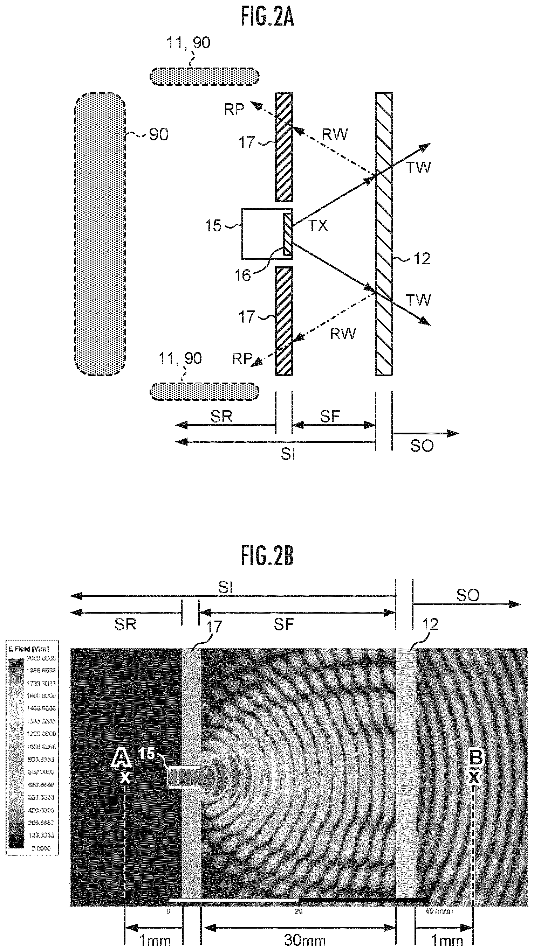

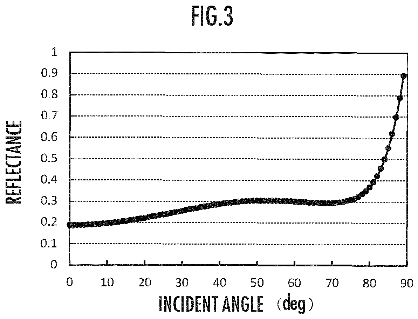

FIG. 2A schematically shows the arrangement of the radar unit 15, the extension 17 that is an electromagnetic-wave absorber, and the light-transmitting cover 12. FIG. 3 is a graph showing the reflectance of an electromagnetic wave relative to the incident angle, the electromagnetic wave having a frequency of 77 GHz and being incident on polycarbonate (PC) of 3 mm in thickness.

As shown in FIG. 2A, the extension 17 is located adjacent to and around the radar unit 15. The light-transmitting cover 12 made of polycarbonate (PC) is located in front of the radar unit 15.

A plurality of extensions 17, which are electromagnetic-wave absorbers, may be provided. As shown in FIG. 1, the extension 17 preferably is placed adjacent to the radar unit 15 and on both sides (left and right) of the radar unit 15 in terms of the electromagnetic-wave absorption.

The extension 17 also preferably is located adjacent to the radar unit 15 and surrounding the radar unit 15 from the four sides of the left, right, top and bottom. In this case, the extension 17 more preferably is configured as an integral electromagnetic-wave absorber extension surrounding the radar unit 15.

The space on one side of the light-transmitting cover 12 close to the radar unit 15 is an internal space SI of the lamp device 10, and the space on the opposite side of the light-transmitting cover 12 is an external space SO of the lamp device 10. The antenna 16 of the radar unit 15 radiates a radar wave TX toward the outside of the device, that is, toward the light-transmitting cover 12.

Here, the space between the extension 17 and light-transmitting cover 12 is called a front space SF, and the space behind the extension 17 is called a rear space SR.

While the radar wave TX radiated from the antenna 16 passes through the light-transmitting cover 12 and is radiated to the outside of the device (transmitted wave TW), a part of the wave is reflected by the light-transmitting cover 12 (reflected wave RW). The reflected wave RW is absorbed by the extension 17, which is the electromagnetic-wave absorber. For a certain electromagnetic-wave absorption rate of the extension 17, a part of the reflected wave RW passes through the extension 17 (transmitted wave RP).

FIG. 2B corresponds to FIG. 2A, and shows the simulated result of electromagnetic field intensity inside and outside the lamp device 10 when a radar wave TX is radiated from the radar unit 15.

In this simulation of electromagnetic field intensity, the distance between the extension 17 and the light-transmitting cover 12 is set to 30 mm, and on the central axis of the antenna 16, point A is set 1 mm behind the extension 17 in the rear space SR, and point B is set 1 mm ahead of the light-transmitting cover 12 in the outer space SO.

The radiation direction of the radar wave TX is set in the direction of the central axis of the antenna surface 16S. The electromagnetic-wave absorption rate of the extension 17 is set to 80%, the light-transmitting cover 12 is made of polycarbonate (PC) of 3 mm in thickness, and the electromagnetic-wave reflectance by the light-transmitting cover 12 is set to 20%.

As shown in FIG. 3, the radar wave is reflected by the light-transmitting cover 12, and the light-transmitting cover 12 has a high reflectance when the angle of incidence is large. For instance, it has a reflectance of about 30% or more when the angle of incidence is about 40° to 70°, and has a reflectance of about 40% to 90% when the angle of incidence is about 80° or more.

The simulation result shows that the electric field intensity at point B in front of the light-transmitting cover 12 is E = 550 V/m, and the electric field intensity at point A behind the extension 17 is E = 0 V/m.

In other words, as also shown in FIG. 2B, the electric field intensity of the reflected wave is suppressed in the rear space SR behind the extension 17, and the reflected radar wave propagated to the front space SF between the extension 17 and the light-transmitting cover 12 is extremely suppressed, thus preventing ghosts or noise.

The radar wave reflected by a vehicle component 90 and others is absorbed by the extension 17 in a round trip, so that the reflected wave returning to the front space SF between the extension 17 and the light-transmitting cover 12 is suppressed.

This shows ghosts or noise caused by unrequired reflected radar waves (and its multiple reflected waves) are effectively suppressed, where these unrequired reflected waves are generated because radar waves reflected by components in the lamp device such as the light-transmitting cover 12 are reflected by the vehicle components 90 such as the vehicle body and engine, and these reflected waves return to the lamp device.

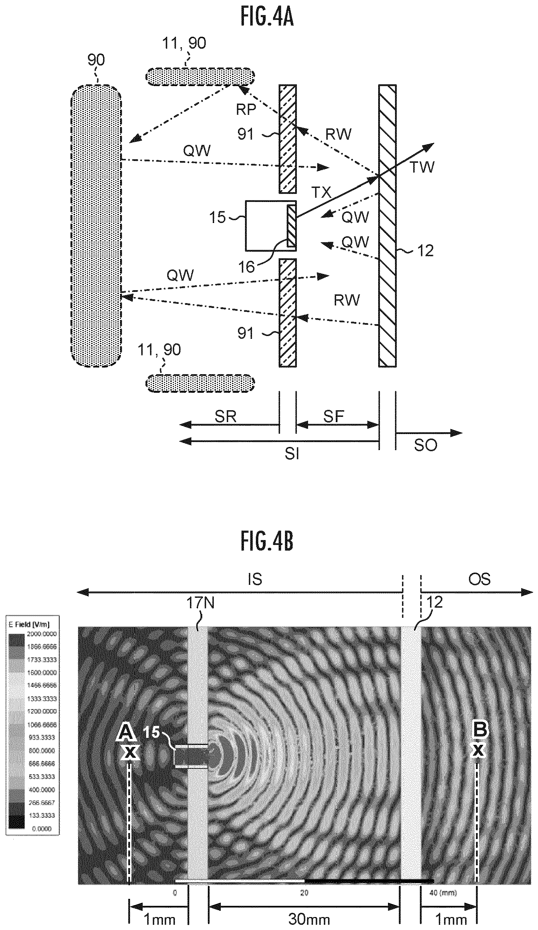

FIG. 4A is similar to FIG. 2A, but shows a comparative example. Specifically, this drawing schematically shows a reflected radar wave in the space inside the lamp device including an extension 91 made of polycarbonate (PC), which transmits an electromagnetic wave, in place of the extension 17, which absorbs an electromagnetic-wave.

The radar wave TX radiated from the antenna 16 is partially reflected by the light-transmitting cover 12 (reflected wave RW). The reflected wave RW passes through the extension 91 (transmitted wave RP) and reflected by the vehicle component 90 and/or the body 11 of the lamp device (reflected wave QW).

The reflected wave QW from the vehicle component 90 then passes through the extension 91, and returns to the front space SF between the extension 91 and the light-transmitting cover 12 to be reflected by the light-transmitting cover 12, the body 11 of the lamp device, and components such as the headlight unit 14 and be incident on the antenna 16, which becomes the cause of ghosts or noise.

FIG. 4B corresponds to FIG. 4A, and shows the simulated result of electromagnetic field intensity inside and outside the lamp device 10 when a radar wave TX is radiated from the radar unit 15. Other conditions such as the thickness (3 mm) and material (polycarbonate: PC) of the light-transmitting cover 12 are the same as those shown in FIG. 2B.

The electric field intensity at point B in front of the light-transmitting cover 12 is E = 550 V/m, and the electric field intensity at point A behind the extension 91 is E = 430 V/m.

In other words, as also shown in FIG. 4B, waves with strong electric field are observed in the rear space SR of the extension 91, and reflected waves of radar waves into the front space SF of the extension 91 exist.

The vehicle has many metal parts such as vehicle components 90 including the vehicle body, engine, radiator, and vehicle parts in the space inside and outside the lamp device 10. The radar waves reflected by these vehicle components 90 to return into the lamp device 10 will generate ghosts and noise.

In particular, radar waves are reflected by the vehicle components 90 such as the vehicle body and engine without being significantly attenuated. The flight time of the reflected radar waves reflected by the vehicle components 90 such as the vehicle body and returned into the lamp device is close to the flight time of the reflected radar waves from an obstacle (detection target) that should be detected and is in front of the lamp device (i.e., the detection distance to an obstacle). They therefore can cause ghosts (false detections), in which non-existent obstacles are detected.

### [Electromagnetic-wave absorber]

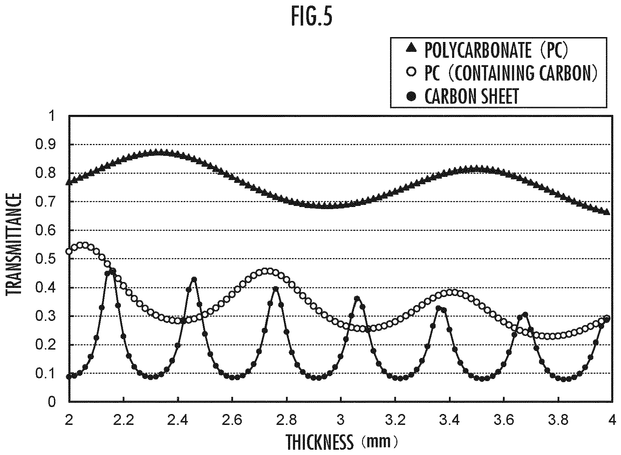

FIG. 5 is a graph showing the results of calculating the transmittance versus thickness for electromagnetic waves (frequency: 77 GHz) incident on polycarbonate (PC), carbon-containing polycarbonate, and a carbon sheet. The incident angle is 0° (normal incidence), and the thickness is plotted in the range of 2 to 4 mm.

Polycarbonate (PC) has the transmittance of approximately 70% or more (has attenuation rate of 30% or less). Therefore, when the extension is made of polycarbonate, most of the reflected waves from the light-transmitting cover 12 and others are transmitted, and high-intensity electromagnetic waves (radar waves) are radiated into the rear space SR.

A carbon sheet has a high dielectric constant, and thus its transmission characteristics have relatively short-period oscillations. Note that, however, the transmittance of the carbon sheet can be set to 20% or less (attenuation rate of 80% or more) over a wide range by adjusting the thickness according to the frequency of radar waves. It is therefore easy to make the transmittance less than 10% (attenuation rate of 90% or more).

Carbon-containing polycarbonate can be changed in transmittance (or attenuation rate) depending on the carbon content. As shown in FIG. 5, the transmittance can be set to 30% or less (attenuation rate is 70% or more).

Thus, an electromagnetic-wave absorber such as a carbon-containing resin or a carbon sheet may be used for the extension 17, whereby the intensity of electromagnetic waves (radar waves) in the rear space SR of the radar unit 15 (or antenna 16) can be suppressed effectively.

As mentioned above, an electromagnetic-wave absorber with an attenuation rate of 70% or more is preferably used. An attenuation rate of 80% or more is more preferable, and an attenuation rate of 90% or more is even more preferable.

Thus, the present embodiment effectively suppresses ghosts or noise caused by unrequired reflected radar waves (and its multiple reflected waves), where these unrequired reflected waves are generated because radar waves reflected by components in the lamp device such as the light-transmitting cover (front cover) 12 are reflected by the vehicle components 90 such as the vehicle body and engine, and these reflected waves return to the lamp device. The present embodiment therefore provides a lamp device with a large dynamic range and high-precision radar function.

### [Second Embodiment]

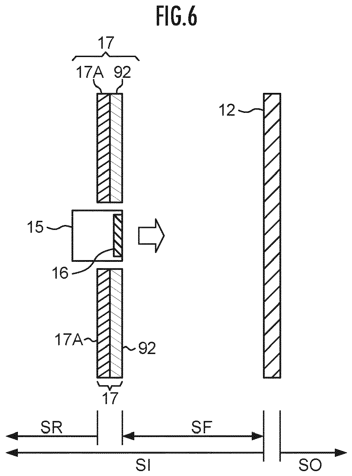

FIG. 6 schematically shows an electromagnetic-wave absorber extension that is a second embodiment of the present invention. The second embodiment is different from the first embodiment in that the extension 17 includes a resin extension member 92 and an electromagnetic-wave absorber 17A placed on the rear surface (toward the rear space SR) of the extension member 92.

Also in the second embodiment, the radar waves reflected by the components in the lamp device such as the light-transmitting cover 12 are absorbed by the extension 17, thus suppressing the intrusion of the reflected radar waves into the rear space SR of the radar unit 15 (or antenna 16).

Thus, the second embodiment effectively suppresses ghosts or noise caused by unrequired reflected radar waves, where these unrequired reflected waves are generated because radar waves reflected by components in the lamp device such as the light-transmitting cover (front cover) 12 are reflected by the vehicle components 90 such as the vehicle body and engine, and these reflected waves return to the lamp device. The present embodiment therefore provides a lamp device with a high-precision radar function.

The extension member 92 may be made of a material that reflects light, guides light, or makes it difficult to see from the outside. Therefore, this embodiment effectively suppress ghosts or noise, and includes the extension 17 that is a design component, which makes it difficult to visually recognize internal structures and others.

### [Third embodiment]

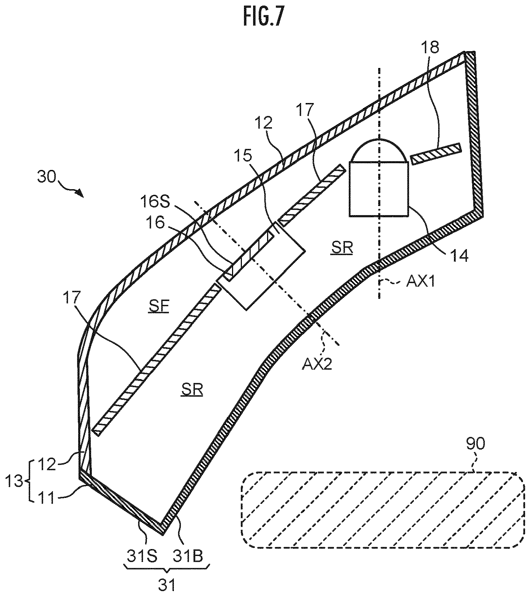

FIG. 7 schematically shows an example of the internal structure of a lamp device 30 that is a third embodiment of the present invention.

The third embodiment differs from the first and second embodiments in that it includes a body 31, which is an electromagnetic-wave absorber, instead of the body 11 of the lamp device 10 of the first embodiment.

That is, the body 31, in addition to the extension 17, is configured as an electromagnetic-wave absorber. Specifically, the body 31 has a rear-part body 31B facing the light-transmitting cover 12 and a side-part body 31S.

At least one of the rear-part body 31B and the side-part body 31S may be configured as an electromagnetic-wave absorber. A part of the rear-part body 31B or side-part body 31S may be configured as an electromagnetic-wave absorber.

The body 31 may be configured as an electromagnetic-wave absorber by attaching an electromagnetic-wave absorber to a part of the body.

The third embodiment effectively suppresses ghosts or noise caused by unrequired reflected radar waves (and its multiple reflected waves), where these unrequired reflected waves are generated because radar waves reflected by components in the lamp device such as the front cover are reflected by the vehicle components 90 such as the vehicle body and engine, and these reflected waves return to the lamp device. The present embodiment therefore provides a lamp device with a high-precision radar function.

### Description of Reference Numerals

10, 30: lamp device
11, 31: body
12: front cover
13: lamp casing
14: lamp unit
15: radar unit
16: antenna
16S: antenna surface
17: extension
31B: rear-part body
31S: side-part body
90: vehicle component

## Claims

1. A lamp device comprising:
a housing which is an attachment portion to a vehicle;
a lamp unit;
a radar unit including an antenna that transmits a radar wave and receives a reflected wave from an object;
a light-transmitting cover that is attached to cover a front side of the housing so as to accommodate the lamp unit and the radar unit in an internal space thereof, the light-transmitting cover transmitting the radar wave; and
an extension disposed in the internal space of the housing, the extension including an electromagnetic-wave absorber.

2. The lamp device according to claim 1, wherein the extension is formed of an electromagnetic-wave absorbing material.

3. The lamp device according to claim 2, wherein the electromagnetic-wave absorbing material is a resin including carbon.

4. The lamp device according to claim 1, wherein the extension is formed of an extension member made of resin, and an electromagnetic-wave absorbing material disposed on a rear surface of the extension member.

5. The lamp device according to claim 1, wherein at least one of a rear part and a side part of the housing is configured as the electromagnetic-wave absorber.

6. The lamp device according to any one of claims 1 to 5, wherein the extension is disposed to surround the radar unit from four sides of left, right, top and bottom of the radar unit.

7. The lamp device according to claim 6, wherein the extension is configured as an integral electromagnetic-wave absorber extension surrounding the radar unit.
